# EUROPEAN PATENT APPLICATION

(11) **EP 4 693 952 A1**
(43) Date of publication of application: **11.02.2026**
(21) Application number: 24795567.7
(22) Date of filing: 23.02.2024
(51) Int. Cl.: H04B 10/25

(54) **OPTICAL LAYER MODULE, ACCESS SITE AND OPTICAL SIGNAL PROCESSING METHOD**

(30) Priority: 26.04.2023 CN 202310481144
(71) Applicant: Huawei Technologies Co., Ltd., Shenzhen, Guangdong 518129 (CN)
(72) Inventor: TANG, Haitao, Shenzhen, Guangdong 518129 (CN); SONG, Jiajun, Shenzhen, Guangdong 518129 (CN); ZHONG, Shengqian, Shenzhen, Guangdong 518129 (CN)
(74) Representative: Gill Jennings & Every LLP
(86) International application number: PCT/CN2024/078439
(87) International publication number: WO 2024/222179

(57) **Abstract**

An optical-layer module, an access site, and an optical signal processing method are provided, and relate to the field of optical communication technologies. In this application, in optical-layer wavelength-drop processing, the access site performs splitting through a splitter in a broadcast manner. A wavelength-drop wavelength is not fixed, so that the access site has a colorless capability. In wavelength-add processing, to prevent a conflict between a wavelength-add wavelength and an optical signal (that is, a pass-through optical signal) in a main line, a wavelength-add blocker (for example, an optical switch) blocks a wavelength-add signal that has a conflict, thereby avoiding crosstalk between the wavelength-add signal and an existing signal in the main line. Both each wavelength-drop port and each wavelength-add port in an optical-layer board provided in this application support being multiplexed as extended ports. Port extension can improve flexibility of network deployment. In addition, a new board is developed to increase a quantity of ports, thereby reducing development resources and development costs.

## Description

### CROSS-REFERENCE TO RELATED APPLICATIONS

This application claims priority to Chinese Patent Application No. 202310481144.2, filed with the China National Intellectual Property Administration on April 26, 2023 and entitled "OPTICAL-LAYER MODULE, ACCESS SITE, AND OPTICAL SIGNAL PROCESSING METHOD", which is incorporated herein by reference in its entirety.

### TECHNICAL FIELD

This application relates to the field of optical communication technologies, and in particular, to an optical-layer module, an access site, and an optical signal processing method.

### BACKGROUND

Currently, an access site at a metro edge uses a conventional fixed optical add/drop multiplexer (Fixed Optical add/drop multiplexer, FOADM) to perform wavelength add/drop on an access device. However, in a solution of using the FOADM, a wavelength-add/drop wavelength is fixed, causing the access site to have no colorless (colorless) capability.

### SUMMARY

Embodiments of this application provide an optical-layer module, an access site, and an optical signal processing method, so that the access site has a colorless capability.

According to a first aspect, an embodiment of this application provides an access site, including a first fiber interface unit, a first splitter, a first wavelength blocker, a first multiplexer, and a second fiber interface unit. The first fiber interface unit is optically coupled to an input port of the first splitter. A second splitter includes N+1 output ports. One of the N+1 output ports serves as a pass-through output port, and the remaining N output ports serve as wavelength-drop ports. The first multiplexer includes N+1 input ports, where one input port serves as a pass-through input port, and the remaining N input ports serve as wavelength-add ports. An output port of the first multiplexer is optically coupled to the second fiber interface unit. A pass-through output port of the first splitter is optically coupled to the pass-through input port of the first multiplexer. The optical coupling may also be understood as optical connection, and the optical connection may be direct connection or indirect connection. The first wavelength blocker is optically connected to the N input ports of the first multiplexer, and is configured to block or send an optical signal that is to enter the N input ports.

In a possible design, the first fiber interface unit is configured to receive a first optical signal, where the first optical signal includes an optical signal of at least one wavelength.

The first splitter is configured to: split the first optical signal into N+1 second optical signals, send one of the N+1 second optical signals to the first multiplexer through the pass-through output port of the first splitter, and send the remaining N second optical signals through N wavelength-drop ports.

The first wavelength blocker is configured to: receive N third optical signals, where wavelengths of the N third optical signals are different, and when determining that the wavelengths of the N third optical signals are all different from the wavelength of the optical signal in the first optical signal, send the N third optical signals to the first multiplexer through N wavelength-add ports of the first multiplexer.

The first multiplexer is configured to: receive the N third optical signals through the N wavelength-add ports, and combine, into a fourth optical signal, the one second optical signal that is sent through the pass-through output port of the first splitter and that is received through the pass-through input interface of the first multiplexer, and the N third optical signals.

The second fiber interface unit is configured to send the fourth optical signal.

In embodiments of this application, in optical-layer wavelength-drop processing, the access site performs splitting through a splitter in a broadcast manner. A wavelength-drop wavelength is not fixed, so that the access site has a colorless capability. In wavelength-add processing, to prevent a conflict between a wavelength-add wavelength and an optical signal (that is, a pass-through optical signal) in a main line, a wavelength-add blocker is used to cause optical signals of different wavelengths to pass, thereby avoiding crosstalk between the wavelength-add signal and an existing signal in the main line.

In a possible design, the first wavelength blocker may include N optical switches, for example, a VOA. The N optical switches are optically connected to the N wavelength-add ports in one-to-one correspondence.

In a possible design, the first wavelength blocker is further configured to: when a wavelength of a fifth optical signal in the N third optical signals is the same as a wavelength of one optical signal in the first optical signal, block the fifth optical signal from being transmitted to the first multiplexer.

In a possible design, the access site further includes:
an optical label detection unit, configured to: detect whether a wavelength of each optical signal in the N third optical signals is the same as the wavelength of the optical signal in the first optical signal, and when detecting that the wavelength of the fifth optical signal in the N third optical signals is the same as the wavelength of the optical signal in the first optical signal, control the first wavelength blocker to block the fifth optical signal from being transmitted to the first multiplexer.

In the foregoing design, the optical label detection unit is deployed to perform detection of a wavelength-add wavelength. For example, the optical label detection unit may include N photoelectric detectors (PDs) and a control unit. The PD is configured to: detect a wavelength of a wavelength-add optical signal, and send a detection result to the control unit. Then, the control unit determines, based on a wavelength that is of an optical signal and that is configured for each access site on an access ring, whether there is a conflict between the wavelength-add optical signal detected by the PD and the wavelength that is of the optical signal and that is configured for the access site on the access ring.

In some embodiments, the optical label detection unit includes a photoelectric detector PD. A control unit is outside the access site.

In a possible design, the access site further includes N optical transform units OTUs, where the N OTUs are optically coupled to the N wavelength-drop ports of the first splitter in one-to-one correspondence. A first OTU in the N OTUs receives a second optical signal sent through a first wavelength-drop port corresponding to the N wavelength-drop ports, and separates an optical signal of a wavelength corresponding to the first OTU from the received second optical signal in a coherent reception manner.

In a possible design, the second fiber interface unit is further configured to receive a sixth optical signal.

The access site further includes a second splitter, a second multiplexer, and a second wavelength blocker.

The second splitter is configured to: split the sixth optical signal into N+1 seventh optical signals, send one of the N+1 seventh optical signals to the second multiplexer, and send the remaining N seventh optical signals through N second wavelength-drop ports.

The second wavelength blocker is configured to: receive N eighth optical signals through N second wavelength-add ports, where wavelengths of the N eighth optical signals are different, and when determining that a wavelength of any one of the N eighth optical signals is different from wavelengths of all optical signals in the sixth optical signal, send the N eighth optical signals to the first multiplexer.

The second multiplexer is configured to: receive the N eighth optical signals, and combine the N eighth optical signals and the first optical signal into a ninth optical signal.

The first fiber interface unit is configured to send the ninth optical signal.

According to the foregoing design, the access site supports bidirectional transmission, for example, eastward transmission and westward transmission.

According to a second aspect, an embodiment of this application provides an optical-layer module. The optical-layer module may also be referred to as an optical-layer board. The optical-layer module may be used in an access site. An example in which the optical-layer module is used in a first access site is used. The optical-layer module includes a fiber interface unit, a splitter, a wavelength blocker, and a multiplexer. The fiber interface unit is optically coupled to an input port of the splitter. A second splitter includes N+1 output ports. One of the N+1 output ports serves as a pass-through output port, and the remaining N output ports serve as wavelength-drop ports. The multiplexer includes N+1 input ports, where one input port serves as a pass-through input port, and the remaining N input ports serve as wavelength-add ports. The wavelength blocker is optically connected to the N input ports of the multiplexer, and is configured to block or send an optical signal that is to enter the N input ports.

In a possible design, the fiber interface unit is configured to receive a first optical signal from a second access site, where the first optical signal includes an optical signal of at least one wavelength. The splitter is configured to: split the first optical signal into N+1 second optical signals, and send the N+1 second optical signals through N+1 output ports of the splitter. One of the N+1 output ports of the splitter serves as a pass-through output port, and the remaining N output ports serve as wavelength-drop ports. The multiplexer is configured to receive a third optical signal through the pass-through input port, where the third optical signal includes an optical signal of at least one wavelength. The wavelength blocker is configured to: receive N fourth optical signals from N optical transform units OTUs, where wavelengths of the N fourth optical signals are different, and when determining that the wavelengths of the N fourth optical signals are all different from the wavelength of the optical signal in the third optical signal, send the N fourth optical signals to the multiplexer through N wavelength-add ports of the multiplexer. The multiplexer is further configured to combine, into a fifth optical signal, the N fourth optical signals received through the N wavelength-add ports, and the third optical signal. The fiber interface unit is further configured to send the fifth optical signal to the second access site.

In the foregoing design, the optical-layer module supports bidirectional transmission.

In a possible design, the optical-layer module further includes:
an optical label detection unit, configured to: detect whether a wavelength of each optical signal in the N fourth optical signals is the same as the wavelength of the optical signal in the third optical signal, and when detecting that a wavelength of a sixth optical signal in the N fourth optical signals is the same as a wavelength of one optical signal in the first optical signals, control the wavelength blocker to block the sixth optical signal from being transmitted to the multiplexer.

In a possible design, the optical-layer module further includes a variable optical attenuator. The variable optical attenuator is optically coupled to the pass-through input port of the multiplexer. The variable optical attenuator is configured to adjust power of the third optical signal received through the pass-through input port.

In a possible design, the optical-layer module may further include an optical amplifier. For example, the optical-layer module includes N optical amplifiers. The N optical amplifiers are optically coupled to the wavelength blocker. For example, the N optical amplifiers are optically coupled to N optical switches in the wavelength blocker in one-to-one correspondence.

In a possible design, one optical amplifier is deployed between the fiber interface unit and an optical splitter.

According to a third aspect, an embodiment of this application provides an access site, including at least one optical-layer module according to any one of the second aspect or the designs of the second aspect.

In a possible design, the at least one optical-layer module includes a first optical-layer module and a second optical-layer module. A first wavelength-drop port of N wavelength-drop ports in the first optical-layer module is optically connected to an input port of a fiber interface unit in the second optical-layer module. The first wavelength-drop port is any one of the N wavelength-drop ports in the first optical-layer module. A first wavelength-add port of N wavelength-add ports in the first optical-layer module is optically connected to the fiber interface unit in the second optical-layer module. The first wavelength-add port is any one of the N wavelength-add ports in the first optical-layer module.

In the foregoing design, two optical-layer modules are cascaded, so that one wavelength-drop port in one optical-layer module is multiplexed as a wavelength-drop extended port, and the wavelength-drop extended port is optically connected to a fiber interface unit of the other optical-layer module. One wavelength-add port in one optical-layer module is multiplexed as a wavelength-add extended port, and the wavelength-add extended port is optically connected to the fiber interface unit of the other optical-layer module.

In a possible design, a pass-through output port in the second optical-layer module is multiplexed as a wavelength-drop port for use. A pass-through input port in the second optical-layer module is multiplexed as a wavelength-add port for use. In the foregoing design, a pass-through output port of a cascaded optical-layer module may also be multiplexed as a wavelength-drop port for use, and a pass-through input port may also be multiplexed as a wavelength-add port for use. Therefore, it may be understood that one optical-layer module has N wavelength-drop ports and N wavelength-add ports, and 2*N wavelength-drop ports and 2*N wavelength-add ports may be obtained through extension by cascading one optical-layer module.

In a possible design, the access site is a site at which a first access ring intersects an access chain connected to the first access ring. This design is applied to a ring with chain access scenario. The access site further includes a filtering unit, where the filtering unit is optically connected to a second wavelength-drop port of N wavelength-drop ports in any one of the at least one optical-layer module. The second wavelength-drop port is for the access site to be connected, in a wavelength-drop direction, to a next-hop access site that is of the access site and that is on the access chain, or is for the access site to be connected, in a wavelength-drop direction, to a next-hop access site that is of the access site and that is on the first access ring. The filtering unit is configured to filter out an optical signal of a wavelength configured for an access site included on the first access ring.

In the foregoing design, at the access site at which the access ring intersects the access chain, a wavelength-drop port of the access site is multiplexed as a wavelength-drop extended port, for performing wavelength drop on an optical signal to the connected access chain. To avoid that there is a wavelength conflict between optical signals of services of access sites on the access ring and optical signals of services of access sites on the access chain, a filtering unit is added at the access site at which the access ring intersects the access chain. Before broadcasting the optical signal on the access ring to the access chain, the filtering unit first filters out the optical signals of wavelengths configured for the access sites included on the access ring. In this way, it is avoided that there is the wavelength conflict between the optical signals of the services of the access sites on the access ring and the optical signals of the services of the access sites on the access chain.

In a possible design, the access site is a site at which a first access ring intersects a second access ring connected to the first access ring.

The access site further includes a filtering unit, where the filtering unit is optically connected to a second wavelength-drop port of N wavelength-drop ports in any one of the at least one optical-layer module.

The second wavelength-drop port is for the access site to be connected, in a wavelength-drop direction of the access site, to a next-hop access site that is of the access site and that is on the access chain, or is for the access site to be connected, in a wavelength-drop direction, to a next-hop access site that is of the access site and that is on the first access ring. The filtering unit is configured to filter out an optical signal of a wavelength configured for an access site included on the first access ring.

In the foregoing design, at the access site at which the first access ring intersects the second access ring, a wavelength-drop port of the access site is multiplexed as a wavelength-drop extended port, for performing wavelength drop on an optical signal to the connected access chain. To avoid that there is a wavelength conflict between optical signals of services of access sites on the access ring and optical signals of services of access sites on the access chain, a filtering unit is added at the access site at which the access ring intersects the access chain. Before broadcasting the optical signal on the access ring to the access chain, the filtering unit first filters out the optical signals of wavelengths configured for the access sites included on the access ring. In this way, it is avoided that there is the wavelength conflict between the optical signals of the services of the access sites on the access ring and the optical signals of the services of the access sites on the access chain.

According to a fourth aspect, an embodiment of this application further provides an optical signal processing method, applied to an access site, where the method includes:
receiving a first optical signal from a second access site or a first aggregation node, where the first optical signal includes an optical signal of at least one wavelength;
splitting the first optical signal into N+1 second optical signals through a first splitter at the first access site, sending one of the N+1 second optical signals to a first multiplexer at the first access site through a pass-through output port of the first splitter, and sending the remaining N second optical signals through N first wavelength-drop ports of the first multiplexer;
receiving N third optical signals, and when determining that a wavelength of a fifth optical signal in the N third optical signals is the same as a wavelength of one optical signal in the first optical signal, blocking the fifth optical signal from being sent to the first multiplexer, and sending the remaining N-1 third optical signals to the first multiplexer;
combining the remaining N-1 third optical signals and the received second optical signal into a fourth optical signal through the first multiplexer; and
sending the fourth optical signal to a third access site or a second aggregation node.

In this application, based on the implementations provided in the foregoing aspects, the implementations may be further combined to provide more implementations.

### BRIEF DESCRIPTION OF DRAWINGS

To describe technical solutions in embodiments of this application more clearly, the following briefly describes accompanying drawings needed for describing embodiments.
FIG. 1 is a diagram of a structure of a service transmission network;
FIG. 2 is a diagram of a structure of an access site;
FIG. 3 is a diagram of a ring with chain networking structure according to an embodiment of this application;
FIG. 4 is a diagram of a ring with ring networking structure according to an embodiment of this application;
FIG. 5 is a diagram of a structure of an access site according to an embodiment of this application;
FIG. 6 is a diagram of a structure of another access site according to an embodiment of this application;
FIG. 7 is a diagram of a structure of still another access site according to an embodiment of this application;
FIG. 8 is a diagram of a structure of still another access site according to an embodiment of this application;
FIG. 9A is a diagram of a structure of an optical-layer board according to an embodiment of this application;
FIG. 9B is a diagram of a structure of another optical-layer board according to an embodiment of this application;
FIG. 10 is a diagram of a structure of still another optical-layer board according to an embodiment of this application;
FIG. 11 is a diagram of a structure of still another optical-layer board according to an embodiment of this application;
FIG. 12A and FIG. 12B are a diagram of a structure of an access site 2 according to an embodiment of this application;
FIG. 13A and FIG. 13B are a diagram of cascading of optical-layer boards in port extension according to an embodiment of this application;
FIG. 14 is a diagram of a structure of a ring with chain access site according to an embodiment of this application;
FIG. 15A and FIG. 15B are a diagram of a structure of a ring with ring access site according to an embodiment of this application; and
FIG. 16 is a schematic flowchart of an optical signal processing method according to an embodiment of this application.

### DESCRIPTION OF EMBODIMENTS

The following describes embodiments of this application with reference to accompanying drawings. It is clear that the described embodiments are merely some rather than all of embodiments of this application. A person of ordinary skill in the art may learn that, with development of technologies and emergence of a new scenario, technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the data termed in such a way are interchangeable in a proper circumstance so that embodiments described herein can be implemented in an order other than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

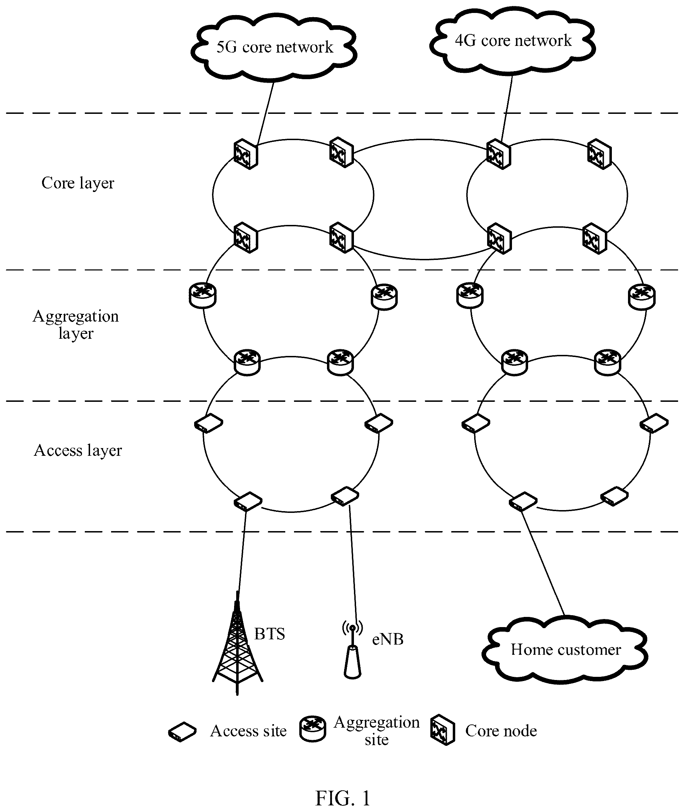

A service transmission network is generally divided into three layers. Refer to FIG. 1. The service transmission network includes a core layer, an aggregation layer, and an access layer. A switching node at the core layer may be referred to as a core node, a switching node at the aggregation layer may be referred to as an aggregation (AGG) node, and a switching node at the access layer may be referred to as an access (ACC) node or an access site. In metro networking, the access site may be referred to as a central office site or an edge site.

The core layer mainly provides high-bandwidth service bearing and transmission, and completes interconnection and interworking with an existing network. The existing network may include an asynchronous transfer mode (ATM) network, a digital data network (DDN), an internet protocol (IP) network, and the like. A main function of the aggregation layer is to provide aggregation and distribution processing of user service data for a service access node, and to implement service level classification of a service. The access layer uses a plurality of access technologies to perform bandwidth and service allocation, to implement user access. An access layer device completes multi-service multiplexing and transmission.

In embodiments of this application, a node may also be referred to as a site, a network device, or the like.

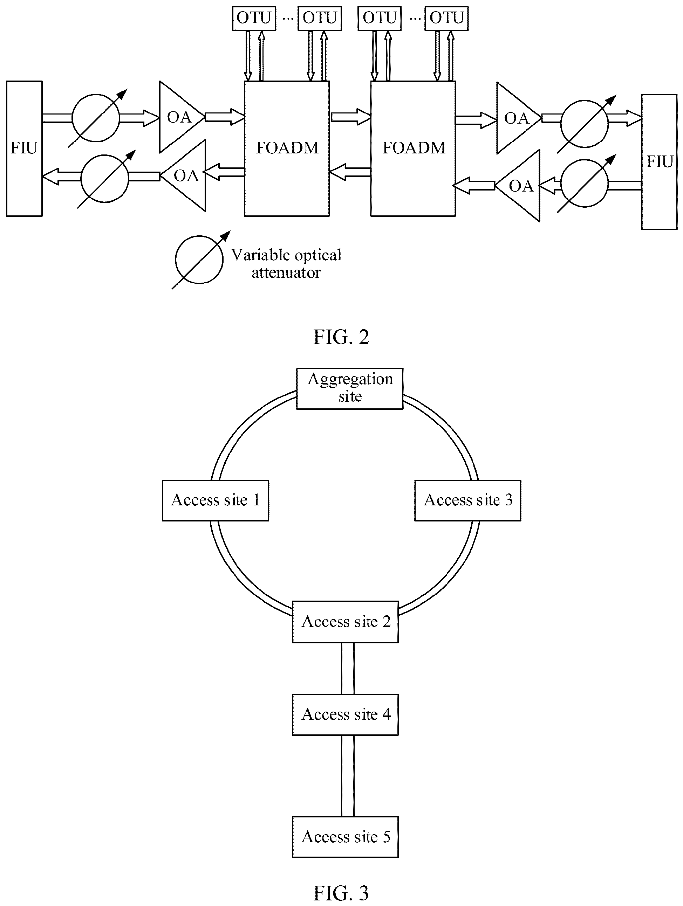

Wavelength division multiplexing refers to combining light (carrying various information) with two or more different wavelengths at a transmit end through a multiplexer, and coupling the light to a same optical fiber for transmission. At a receive end, a demultiplexer separates light of various wavelengths, and then an optical receiver performs further processing to restore an original signal. The technology in which transmission of the light with the two or more different wavelengths is simultaneously performed in the same optical fiber is referred to as the wavelength division multiplexing. A transmission capacity of an optical fiber can be increased by using the wavelength division multiplexing technology. In a wavelength division multiplexing networking manner, different access sites are allocated with different wavelengths to bear services. Refer to FIG. 2. An optical-layer module of an access site includes a multiplexer/demultiplexer, an optical amplifier (OA), an optical attenuator, and a fiber line interface unit (FIU). A function of the optical amplifier is to provide an optical signal gain, to compensate for transmission attenuation of an optical signal in a path, and increase a non-relay transmission distance of a system. The optical attenuator is a component that attenuates optical power. Currently, the multiplexer/demultiplexer uses a fixed optical add/drop multiplexer (FOADM) to perform wavelength-add/drop processing. After receiving optical signals sent by another connected access site, an FOADM at the access site is responsible for separating an optical signal that is of a wavelength corresponding to the FOADM and that is in the received optical signals, performs wavelength-drop processing, and sends the optical signal to an optical transform unit (optical transform unit, OTU) (which may also be referred to as an optical interface converter). Pass-through processing is performed on an optical signal that is other than the optical signal of the wavelength corresponding to the FOADM and that is in the received optical signals, and the optical signal is sent to another FOADM of the access site. The another FOADM couples the received pass-through optical signal with an optical signal to be sent by an access site of the another FOADM, and then performs sending. The OTU is mainly responsible for transforming, into a signal that is suitable for performing processing on a client side, a transmission optical signal in a conventional network, or transforming a signal on a client side into an optical signal that is suitable for performing transmission in a network. As shown in FIG. 2, in a solution of using the FOADM, a wavelength-add/drop wavelength is fixed, causing the access site to have no colorless (colorless) capability. In addition, a wavelength of each port is fixed, causing the access site to have no port extension capability, either.

Based on this, embodiments of this application provide an optical-layer module, an access site, and a network system. The optical-layer module provided in embodiments of this application may be used in the access site. The access site may be used in an access ring. The access site may also be referred to as a network device, an access node, or the like. The access device may also be used in a packet transport network (packet transport network, PTN) or an optical transport network (optical transport network, OTN).

It should be noted that in the descriptions ofthis application, unless otherwise specified, "a plurality of" means two or more than two. In addition, "/" indicates that associated objects are in an "or" relationship, for example, A/B may indicate A or B. "And/or" in this application merely describes an association relationship between the associated objects and indicates that three relationships may exist. For example, A and/or B may indicate three cases: Only A exists, both A and B exist, and only B exists, where A and B may be singular or plural. In addition, for ease of clearly describing technical solutions in embodiments of this application, in embodiments of this application, terms such as "first" and "second" are used to distinguish between same objects or similar objects whose functions and purposes are basically the same. A person skilled in the art may understand that the terms such as "first" and "second" do not limit a quantity or an execution sequence, and the terms such as "first" and "second" do not indicate a definite difference. It should be further noted that, unless otherwise specified, specific descriptions of some technical features in one embodiment may also be applied to explaining corresponding technical features mentioned in another embodiment.

In embodiments of this application, the access ring may support bidirectional transmission. Specifically, two-fiber unidirectional transmission or single-fiber bidirectional transmission may be used. The two-fiber unidirectional transmission means that any two network devices on the access ring are connected by using two optical fibers, and directions of optical signals of which transmission is performed by using the two optical fibers are opposite. The single-fiber bidirectional transmission means that any two network devices on the access ring are connected by using one optical fiber, and the optical fiber can be used to perform transmission of optical signals in two directions. The access ring in embodiments of this application may also use the unidirectional transmission. The optical-layer module and the access site provided in embodiments of this application may be used in a chain networking structure, a ring with ring networking structure, or a ring with chain networking structure.

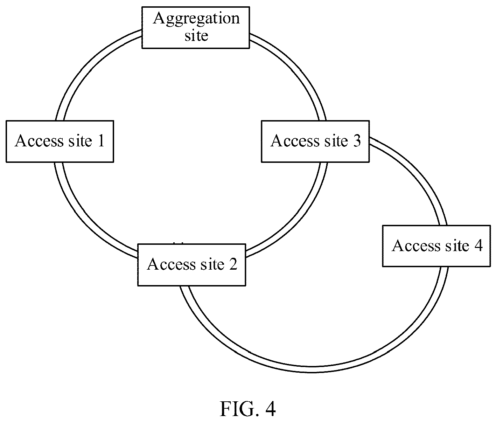

FIG. 3 is a diagram of a ring with chain networking structure according to an embodiment of this application. In FIG. 3, an access ring uses two-fiber unidirectional transmission. The access ring may include N access sites and an aggregation point. Herein, an example in which the access ring includes three access sites is used for description. The access sites included on the access ring are respectively an access site 1, an access site 2, and an access site 3. An access chain includes the access site 2, an access site 4, and an access site 5. The access site 2 is a site at which the access ring intersects the access chain. FIG. 4 is merely an example, and does not specifically limit a quantity of access sites included on an access ring and a quantity of access sites included on an access chain.

FIG. 4 is a diagram of a ring with ring networking structure according to an embodiment of this application. In FIG. 4, the access rings use two-fiber unidirectional transmission. An example in which one access ring includes three access sites and one aggregation site is used for description. The access sites included on the access ring are respectively an access site 1, an access site 2, and an access site 3. The other access ring includes three access sites: the access site 2, the access site 3, and an access site 4. The access site 2 and the access site 3 are sites at which the two access rings are intersected. FIG. 4 is merely an example, and does not specifically limit the quantity of access sites included on the access ring.

The following describes a structure of an access site provided in this application.

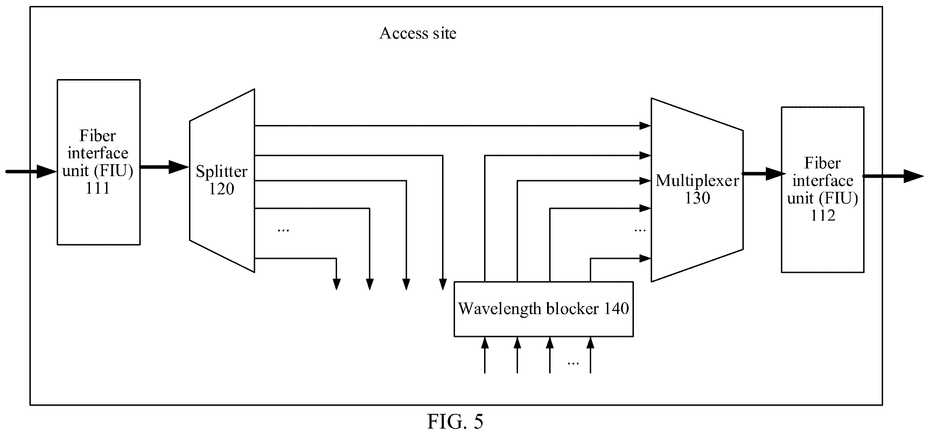

FIG. 5 is a diagram of a structure of a possible access site according to an embodiment of this application. The access site 100 includes two fiber interface units: a fiber interface unit 111 and a fiber interface unit 112. The access site 100 further includes a splitter (Splitter, SPL) 120, a multiplexer (coupler, CPL) 130, and a wavelength blocker 140. The fiber interface unit 111 and the fiber interface unit 112 are respectively configured to be connected to other access sites. The splitter 120 is configured to perform splitting (or path splitting) on an optical signal. It may be understood that content included in each optical signal after splitting is performed is consistent with content included in each optical signal before splitting is performed. The wavelength blocker 140 is configured to block light of a signal with a same wavelength as that of a pass-through optical signal (a main line signal), to avoid crosstalk caused to an existing signal wave in a main line. It should be noted that FIG. 5 is merely an example, and the access site may further include more components, for example, an amplifier and an optical attenuator. The following separately describes wavelength-add processing and wavelength-drop processing of the access site.

In wavelength-drop processing:
the fiber interface unit 111 receives an optical signal 1 of another access site or an aggregation site that is connected, where the optical signal 1 includes an optical signal of at least one wavelength.

The splitter 120 is configured to: split an optical signal 1-1 into N+1 optical signals 2_0 to 2_N, and send one of the N+1 optical signals 2_0 to 2_N to the multiplexer 130. For example, the optical signal 2_0 is sent to the multiplexer 130. The splitter 120 sends the remaining N optical signals, respectively optical signals 2_1 to 2_N, through N wavelength-drop ports of the splitter 120. For example, the splitter 120 sends the optical signals 2_1 to 2_N to N OTU modules.

For example, the OTU module uses a coherent operating manner, and needs to receive an optical signal of a specific wavelength. In this case, a local oscillator (local oscillator, LO) of the OTU module may be adjusted to the corresponding wavelength, and then only a signal needed by the OTU module may be received by using a bandwidth limitation of a transceiver of the OTU module, and an unnecessary signal is filtered out, thereby completing coherent reception.

In wavelength-add processing:
the wavelength blocker 140 receives N optical signals 3_1 to 3_N to be sent by the access site. When a wavelength of any one of the N optical signals 3_1 to 3_N is different from a wavelength of a signal included in the optical signal 2_0, the N optical signals 3_1 to 3_N are sent to the multiplexer 130. Therefore, the multiplexer 130 couples the N optical signals 3_1 to 3_N and the optical signal 2_0, to obtain an optical signal 4_1, and then the optical signal 4_1 is sent by the fiber interface unit 112.

In some embodiments, when a wavelength of an optical signal in the N optical signals 3_1 to 3_N is the same as a wavelength of a signal included in the optical signal 2_0, for example, a wavelength of an optical signal 3_2 is the same as a wavelength of a signal in the optical signal 2_0, the wavelength blocker 140 blocks the optical signal 3_2 from being sent to the multiplexer 130.

According to the solution provided in this embodiment of this application, the access site performs wavelength-drop processing in a broadcast manner through the splitter and the multiplexer. A wavelength-drop wavelength is not fixed, so that the access site can have a colorless capability.

For example, the wavelength blocker 140 in this embodiment of this application may include N optical switches. The N optical switches may be N separate components, or may be N optical switches integrated together. A conventional variable optical attenuator (Variable Optical Attenuator, VOA) with the N discrete components or a conventional fully-integrated VOA may alternatively be used as the wavelength blocker. A component used by the wavelength blocker 140 and a deployment form are not specifically limited in this embodiment of this application.

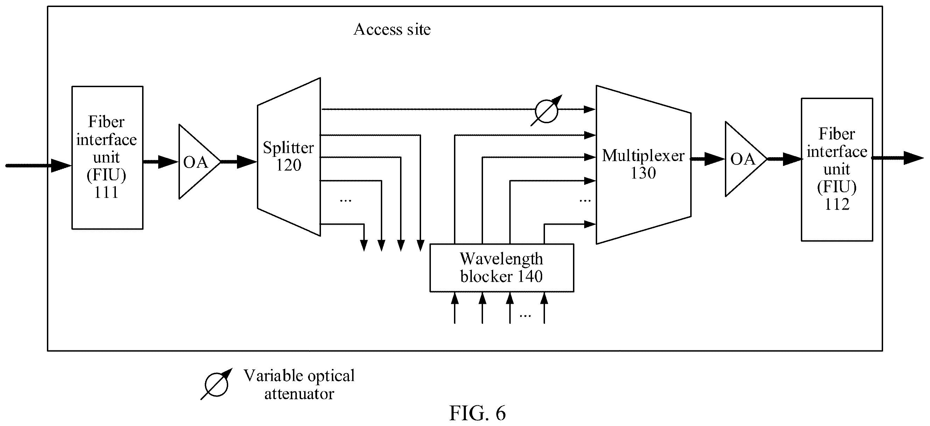

In a possible implementation, refer to FIG. 6. The access site may further include an optical amplifier, configured to provide a gain for transmission of an optical signal, to compensate for transmission attenuation of an optical signal in a path. The optical amplifier may be deployed between the fiber interface unit 111 and the splitter 120, or may be deployed between the fiber interface unit 112 and the multiplexer 130. In some embodiments, one optical amplifier may be deployed between the fiber interface unit 111 and the splitter 120, and one optical amplifier may be deployed between the fiber interface unit 112 and the multiplexer 130.

For example, a variable optical attenuator may be further included at a position of a pass-through input port, and the variable optical attenuator is a component for attenuating optical power. The variable optical attenuator is added at the position of the pass-through input port. In one aspect, power of a pass-through optical signal may be adjusted to ideal power. In another aspect, in port extension, the pass-through input port may be extended as a wavelength-add port, for blocking a wavelength-add optical signal from entering a main line when there is a conflict between a wavelength of the wavelength-add optical signal and a wavelength of an optical signal in the main line.

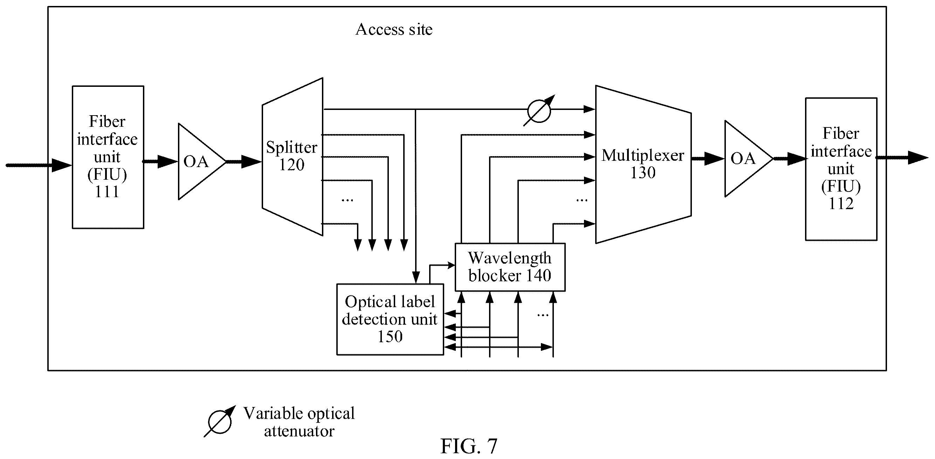

In a possible implementation, refer to FIG. 7. The access site may further include an optical label detection unit 150. The optical label detection unit 150 is configured to identify whether there is a conflict between a wavelength of a new wavelength-add optical signal and a wavelength of an optical signal in the main line. If there is the conflict, the wavelength blocker 140 may be controlled to block light of a signal with a same wavelength from entering the main line, to avoid crosstalk caused to an existing signal in the main line. For example, the optical label detection unit 150 may use a photoelectric diode (photoelectric diode, PD), or may use another component. All components that can detect an optical wavelength conflict are applicable to this application.

In a possible example, the optical label detection unit 150 may include N PDs. The PD is configured to: detect the wavelength of the wavelength-add optical signal, and send a detection result to an external control device. The control device determines, based on a wavelength that is of an optical signal and that is configured for each access site on an access ring, whether there is a conflict between the wavelength of the wavelength-add optical signal detected by the PD, and the wavelength that is of the optical signal and that is configured for the access site on the access ring.

In another possible example, the optical label detection unit 150 includes a photoelectric detector PD and a control unit. The PD is configured to: detect a wavelength of a wavelength-add optical signal, and send a detection result to the control unit. The control unit determines, based on a wavelength that is of an optical signal and that is configured for each access site on an access ring, whether there is the conflict between the wavelength of the wavelength-add optical signal detected by the PD, and the wavelength that is of the optical signal and that is configured for the access site on the access ring.

After an optical signal sent by the OTU module passes through the wavelength blocker 140, the wavelength blocker 140 is in a turn-off state (that is, does not perform blocking) by default. In this case, the optical label detection unit 150 is relied on to identify whether there is the conflict between the wavelength of the new wavelength-add optical signal and the wavelength of the optical signal in the main line. If it is identified that there is a conflict between a wavelength of a new wavelength-add optical signal and the wavelength of the optical signal in the main line, the wavelength blocker 140 is controlled to control a switch status of a path of the optical signal to be always in a turn-off state. If it is identified that there is no conflict between a wavelength of a new wavelength-add optical signal and the wavelength of the optical signal in the main line, the wavelength blocker 140 is controlled to control a switch status of a path of the optical signal from a turn-off state to a turn-on state, to prevent rogue light impact on wavelength add. For example, in the wavelength-add processing, the wavelength blocker 140 detects whether there is a conflict between the wavelength of the any one of the N optical signals 3_1 to 3_N on which wavelength-add is performed by the OTU module, and the wavelength of the signal included in the optical signal 2_0. For example, when detecting that the wavelength of the optical signal 3_2 in the N optical signals 3_1 to 3_N is the same as the wavelength of the signal included in the optical signal 2_0, the wavelength blocker 140 is controlled to block the optical signal 3_2 from being sent to the multiplexer 130.

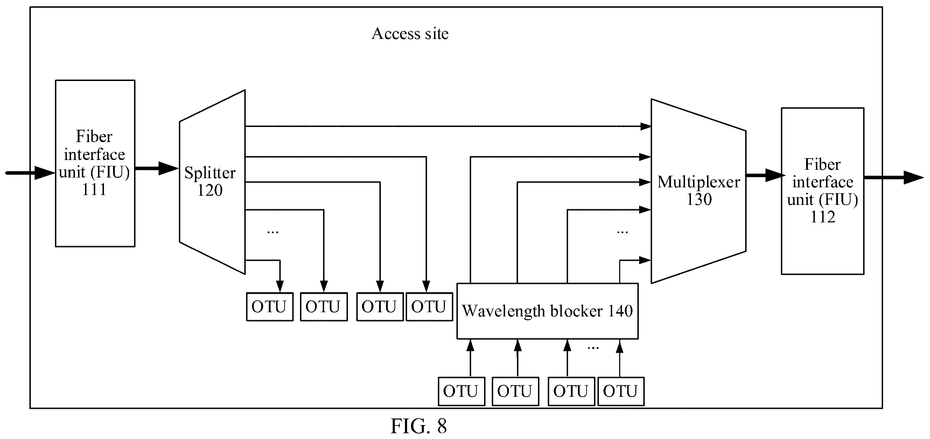

In a possible implementation, the OTU module may be deployed inside the access site, as shown in FIG. 8. In some embodiments, the access site may further have an optical supervisory channel (optical supervisory channel, OSC) unit for transmission of supervisory information. The access site may further have an optical time domain reflectometer (optical time domain reflectometer, OTDR) unit. The OTDR transmits an optical pulse to an optical fiber. When the optical pulse is transmitted in the optical fiber, scattering and reflection are generated due to optical link abnormalities such as properties of the optical fiber, connectors, interruption, or bending. A part of scattered optical signals and a part of reflected optical signals are returned to the OTDR. The OTDR determines whether an optical link is abnormal based on a time domain characteristic of the received scattered optical signal and the received reflected optical signal. The OSC unit and the OTDR unit may be connected to the fiber interface unit. For example, the fiber interface unit 111 and the fiber interface unit 112 each are connected to one OSC unit and/or OTDR unit.

In some embodiments, in a ring bidirectional networking manner, two optical-layer modules (which may also be referred to as optical-layer boards) of a same structure may be deployed at the access site.

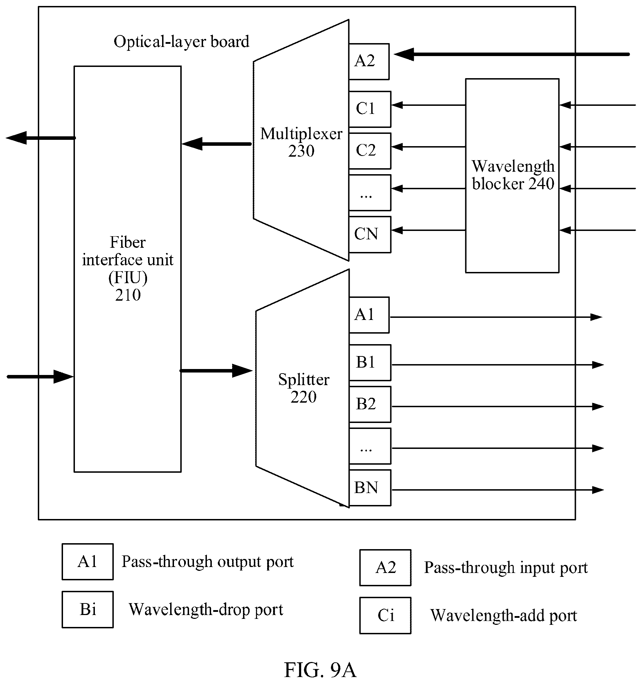

FIG. 9A is a diagram of a structure of a possible optical-layer board according to an embodiment of this application. The optical-layer board includes a fiber interface unit 320, a splitter 220, a multiplexer 230, and a wavelength blocker 240. The optical-layer board may be used in the eastward or westward of ring networking.

The fiber interface unit 320 is configured to receive an optical signal sent by a connected access site. An optical signal 4_1 is used as an example. The optical signal 4_1 is transmitted to the splitter 220. The optical signal 4_1 includes an optical signal of at least one wavelength. The splitter 220 is configured to split the optical signal 4_1 into N+1 optical signals 5_0 to 5_N. The splitter 220 may include N+1 output ports. One of the output ports is a pass-through output port, and the remaining N output ports are wavelength-drop ports. For ease of description, the pass-through output port is referred to as A1, the N wavelength-drop ports are referred to as Bi, and N≥i>0. For example, the optical signal 5_0 is sent through the pass-through output port A1. The splitter 220 sends the remaining N optical signals, respectively optical signals 5_1 to 5_N, through N wavelength-drop ports B1 to BN of the splitter 220.

The multiplexer 230 includes N+1 input ports. One of the input ports is a pass-through input port, and the remaining N input ports are wavelength-add ports. For ease of description, the pass-through input port is referred to as A2, the N wavelength-add ports are referred to as Ci, and N≥i>0. The pass-through input port A2 is configured to receive an optical signal from another optical-layer board, and the optical signal herein is referred to as an optical signal 6_0. It may be understood that an input optical path of a pass-through input port or an output optical path of a pass-through output port in the optical-layer board is a main line. The wavelength blocker 240 receives N optical signals 7_1 to 7_N to be sent by the access site. When a wavelength of any one of the N optical signals 7_1 to 7_N is different from a wavelength of a signal included in the optical signal 6_0, the N optical signals 7_1 to 7_N are input to the multiplexer 230 through the N wavelength-add ports. Therefore, the multiplexer 230 couples the N optical signals 3_1 to 3_N that are input through the N wavelength-add ports, and the optical signal 6_0 that is input through the pass-through input port, to obtain an optical signal 8_1, and then the optical signal 8_1 is sent by the fiber interface unit 320.

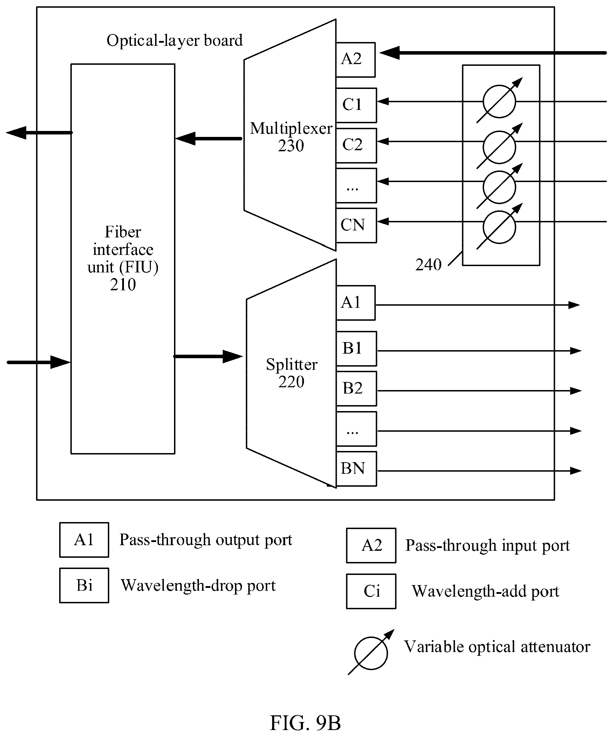

For example, the wavelength blocker 240 in this embodiment of this application may include N optical switches. The N optical switches may be N separate components, or may be N optical switches integrated together. A conventional VOA with the N discrete components or a conventional fully-integrated VOA may alternatively be used as the wavelength blocker. A component used by the wavelength blocker 240 and a deployment form are not specifically limited in this embodiment of this application. FIG. 9B is a diagram of a structure of another optical-layer board according to an embodiment of this application. FIG. 9B uses an example in which a wavelength blocker 240 includes N variable optical attenuators.

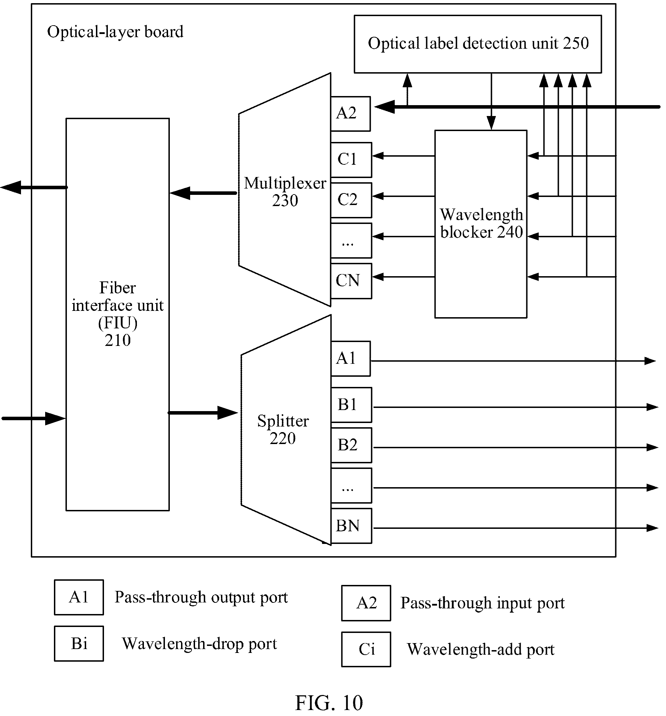

In a possible embodiment, FIG. 10 is a diagram of a structure of a possible optical-layer board according to an embodiment of this application. The optical-layer board may further include an optical label detection unit 250. For a function of the optical label detection unit 250, refer to the descriptions of the foregoing optical label detection unit 150. Details are not described herein again.

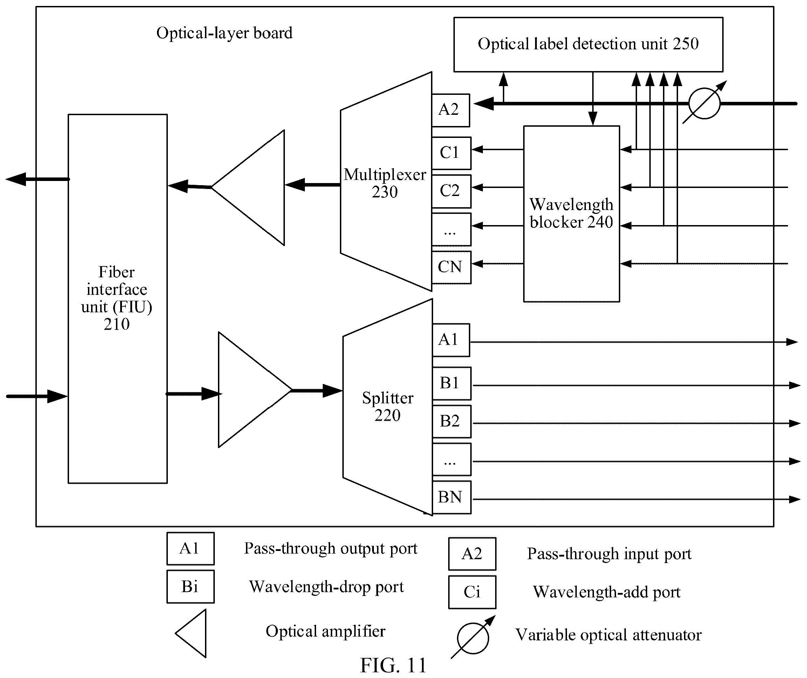

In a possible implementation, refer to FIG. 11. The optical-layer board may further include an optical amplifier, configured to provide a gain for an input optical signal, to compensate for transmission attenuation of an optical signal in a path. The optical amplifier may be deployed between a fiber interface unit 320 and a splitter 220, or may be deployed between a fiber interface unit 320 and a multiplexer 230. In some embodiments, one optical amplifier may be deployed between the fiber interface unit 320 and the splitter 220, and one optical amplifier may be deployed between the fiber interface unit 320 and the multiplexer 230. For example, a variable optical attenuator may be further included at a position of a pass-through input port, and the variable optical attenuator is a component for attenuating optical power. The variable optical attenuator is added at the position of the pass-through input port. In one aspect, power of a pass-through optical signal may be adjusted to ideal power. In another aspect, in port extension, the pass-through input port may be extended as a wavelength-add port, for blocking a wavelength-add optical signal from entering a main line when there is a conflict between a wavelength of the wavelength-add optical signal and a wavelength of an optical signal in the main line.

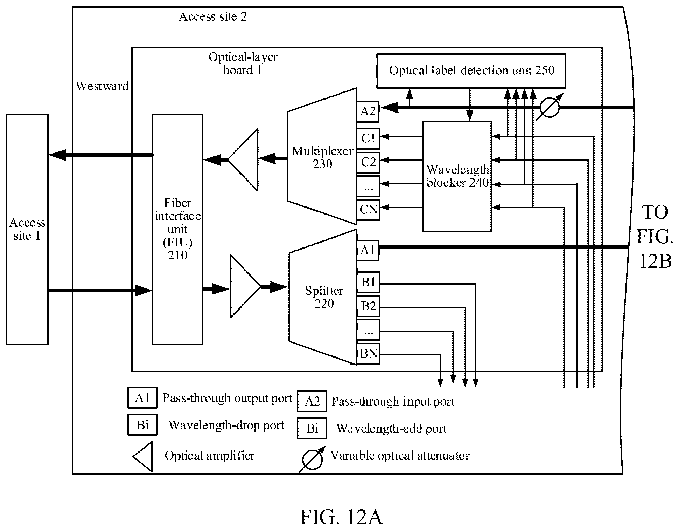

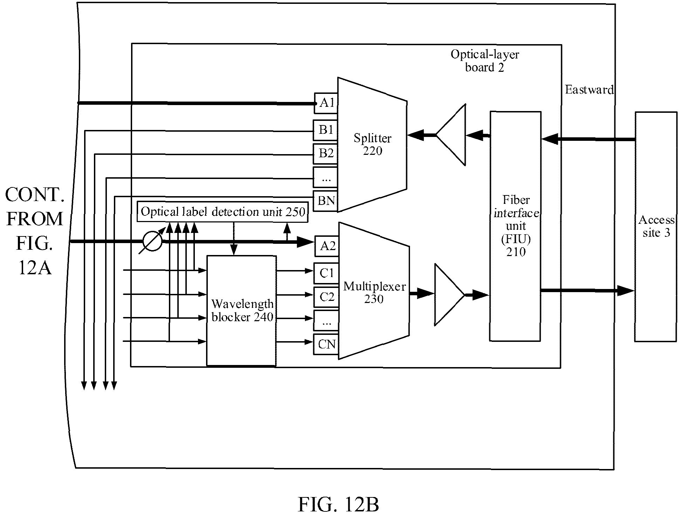

FIG. 12A and FIG. 12B are a diagram of a structure of another possible access site. The access site includes two optical-layer boards: an optical-layer board 1 and an optical-layer board 2. The access site implements bidirectional transmission by using the optical-layer unit 1 and the optical-layer board 2. An example in which the access site is an access site 2, an access site 1 is connected westward, and an access site 3 is connected eastward is used. For a function of each component in the optical-layer unit 1 and the optical-layer board 2, refer to the descriptions of the foregoing optical-layer board. Details are not described herein again. In some embodiments, the access site 2 may further have an OSC unit and/or an OTDR unit. Functions of the OSC unit and the OTDR unit are as described above. Details are not described herein again.

In this embodiment of this application, both a wavelength-add port and a wavelength-drop port support extension. In an example, extension of the wavelength-add port and the wavelength-drop port may be implemented by cascading two optical-layer boards. For example, a splitter is 1:5, to be specific, one input is split into five inputs. For example, a multiplexer is 5:1, to be specific, five inputs are coupled into one input. An example in which the optical-layer board 1 and an optical-layer board 3 are used to implement port extension. For ease of description, the optical-layer board 1 and the optical-layer board 3 are combined into an extended board.

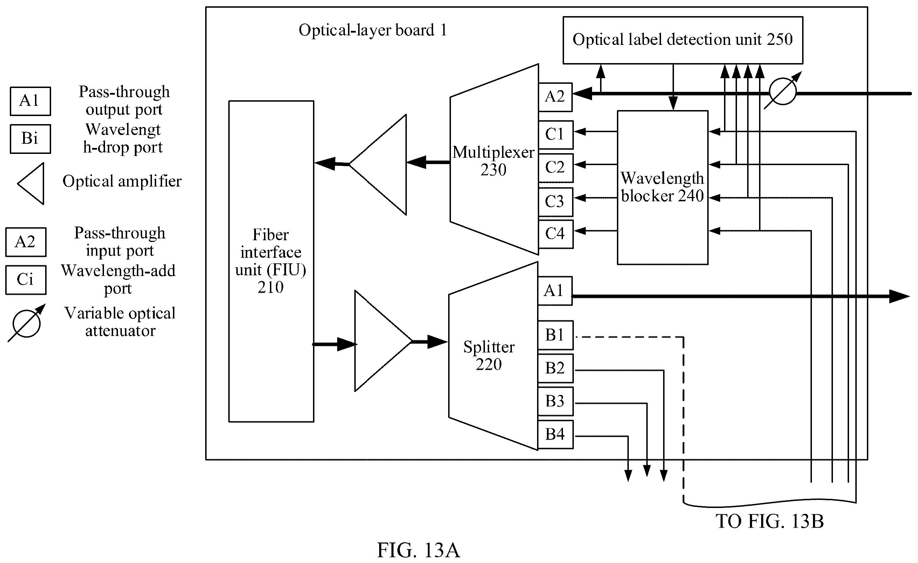

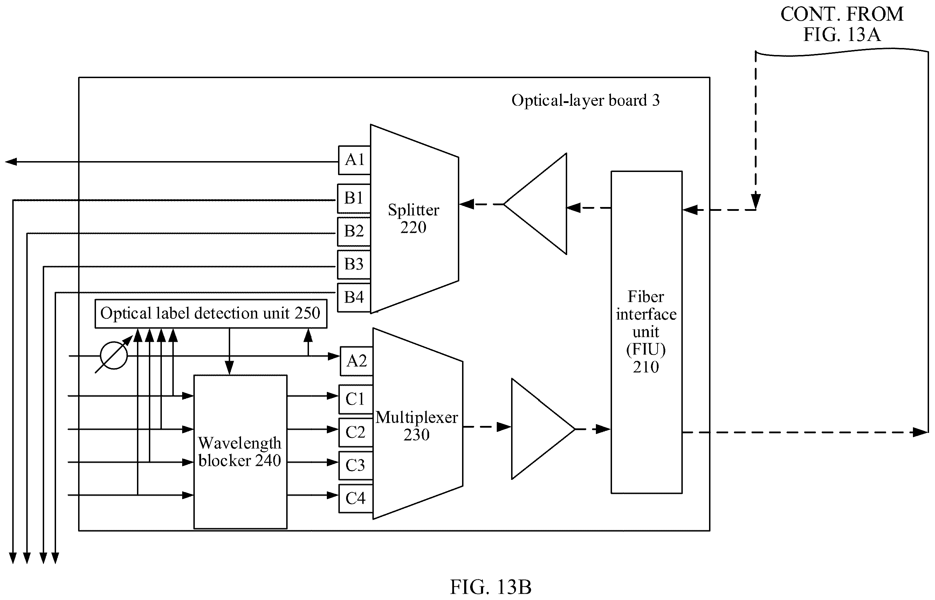

Refer to FIG. 13A and FIG. 13B. A wavelength-drop port B1 in an optical-layer board 1 serves as a wavelength-drop extended port, and is connected to an input interface of a fiber interface unit 320 in an optical-layer board 3. It is equivalent to that the wavelength-drop port B1 in the optical-layer board 1 is connected to the input interface of the fiber interface unit 320 in the optical-layer board 3, to extend one wavelength-drop port B1 to five wavelength-drop ports. The five wavelength-drop ports include wavelength-drop ports B1 to B4 and a pass-through output port A1 in the optical-layer board 3. The pass-through output port A1 in the optical-layer board 3 is multiplexed as a wavelength-drop port. Therefore, wavelength-drop ports B2 to B4 in the optical-layer board 1, and the wavelength-drop ports B1 to B4 and the pass-through output port A1 in the optical-layer board 3 form wavelength-drop ports of an extended board, that is, after port extension, original four wavelength-drop ports are extended to eight wavelength-drop ports.

Refer to FIG. 13A and FIG. 13B. A wavelength-add port C1 in an optical-layer board 1 serves as a wavelength-add extended port, and is connected to an output interface of a fiber interface unit 320 in an optical-layer board 3. It is equivalent to that after passing through a wavelength blocker 240 and an optical amplifier, the wavelength-add port C1 in the optical-layer board 1 is connected to the output interface of the fiber interface unit 320 in the optical-layer board 3, to extend one wavelength-add port C1 to five wavelength-add ports. The five wavelength-add ports include wavelength-add ports C1 to C4 and a pass-through input port A2 in the optical-layer board 3. The pass-through output port A2 in the optical-layer board 3 is multiplexed as a wavelength-add port. Therefore, wavelength-add ports C2 to C4 in the optical-layer board 1, and the wavelength-add ports C1 to C4 and the pass-through input port A2 in the optical-layer board 3 form wavelength-add ports of an extended board, that is, after port extension, original four wavelength-add ports are extended to eight wavelength-add ports.

It may be understood that each wavelength-add port in the optical-layer board may serve as the wavelength-add extended port, and each wavelength-drop port in the optical-layer board may serve as the wavelength-drop extended port. Therefore, one optical-layer board has N wavelength-add ports and N wavelength-drop ports. 2*N wavelength-add ports and 2*N wavelength-drop ports are obtained through extension by cascading two optical-layer boards. 3*N wavelength-add ports and 3*N wavelength-drop ports are obtained through extension by cascading three optical-layer boards. The rest can be deduced by analogy. N*N wavelength-add ports and N*N wavelength-drop ports may be obtained through extension by performing cascading on N optical-layer boards.

The optical-layer board provided in this embodiment of this application may also be used in a ring with chain application scenario. The networking architecture shown in FIG. 3 is used as an example. A structure of an access site 2 is described. To enable the access site 2 to be connected to an access site 4, the structure of the access site 2 is reconstructed in this embodiment of this application. Only a filtering unit needs to be added. The filtering unit is configured to filter out an optical signal of a wavelength configured for each access site on an access ring, to avoid a wavelength conflict caused by secondary broadcast from the access ring to an access chain. For example, the filtering unit may use a wavelength selective switch (wavelength selective switch, WSS).

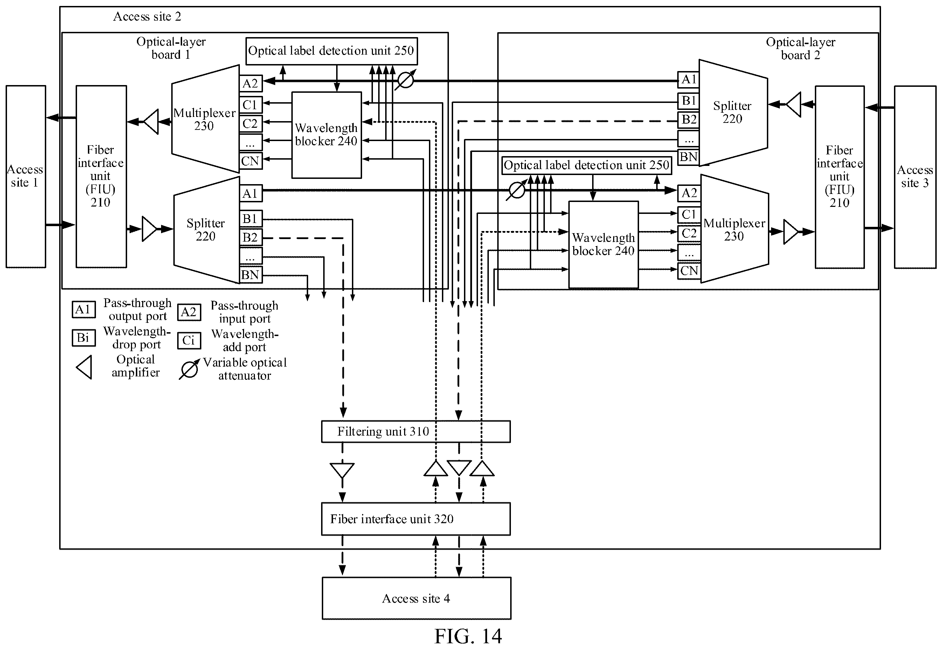

The access site 2 includes two optical-layer boards: the optical-layer board 1 and an optical-layer board 2. Any wavelength-add port and any wavelength-drop port that are in the optical-layer board 1 may serve as extended ports, for being connected to the access site 4. In some embodiments, refer to FIG. 14. The access site further includes a filtering unit 310 and a fiber interface unit 320. An access site 2 broadcasts an optical signal to an access chain through an extended port. After receiving the broadcast optical signal, the filtering unit 310 filters out, from the optical signal, an optical signal of a wavelength configured for each site included on the access ring.

Refer to FIG. 14. Wavelength-add ports C2 of an optical-layer board 1 and an optical-layer board 2 serve as wavelength-add extended ports, and are connected to an output interface of the fiber interface unit 320. A wavelength-add signal of an access site 4 enters the access site 2 through the fiber interface unit 320. After passing through an amplifier and a wavelength blocker 240 in the optical-layer board 1 or the optical-layer board 2, the wavelength-add signal of the access site 4 is coupled with a wavelength-add optical signal of the access site 2 and an optical signal received through a pass-through input interface, and sending is performed by a fiber interface unit 320. In some embodiments, if an optical label detection unit 250 in the optical-layer board 1 or the optical-layer board 2 detects that there is a conflict between an optical signal that is of an access chain and that is to enter a wavelength-add port B2, and an optical signal of a main link, the wavelength blocker 240 blocks the wavelength-add optical signal of the access site 4 on the access chain, to avoid that the wavelength-add optical signal enters the wavelength-add port C2.

Refer to FIG. 14. Wavelength-drop ports B2 in the optical-layer board 1 and the optical-layer board 2 serve as wavelength-drop extended ports, and are connected to the filtering unit 310. The access site 2 broadcasts an optical signal to the access site 4 on the access chain through the wavelength-drop port B2. After receiving the optical signal to be broadcast to the access site 4 on the access chain, the filtering unit 310 filters out, from the optical signal to be broadcast to the access site 4 on the access chain, the optical signal of the wavelength configured for each site included on the access ring.

The optical-layer board provided in this embodiment of this application may also be used in a ring with ring application scenario. The networking architecture shown in FIG. 4 is used as an example. A structure of the access site 2 is described. To enable the access site 2 to be connected to the access site 4 and enable an access site 3 to be connected to the access site 4, the structure of the access site 2 is reconstructed in this embodiment of this application. Only a filtering unit needs to be added. The filtering unit is configured to filter out an optical signal of a wavelength configured for each access site on an access ring, to avoid a wavelength conflict caused by secondary broadcast from the access ring to the access ring. For example, the filtering unit may use a wavelength selective switch (wavelength selective switch, WSS). An access ring on which an access site 1 to the access site 3 are located is referred to as an access ring 1, and an access ring formed by access sites 2 to 4 is referred to as an access ring 2.

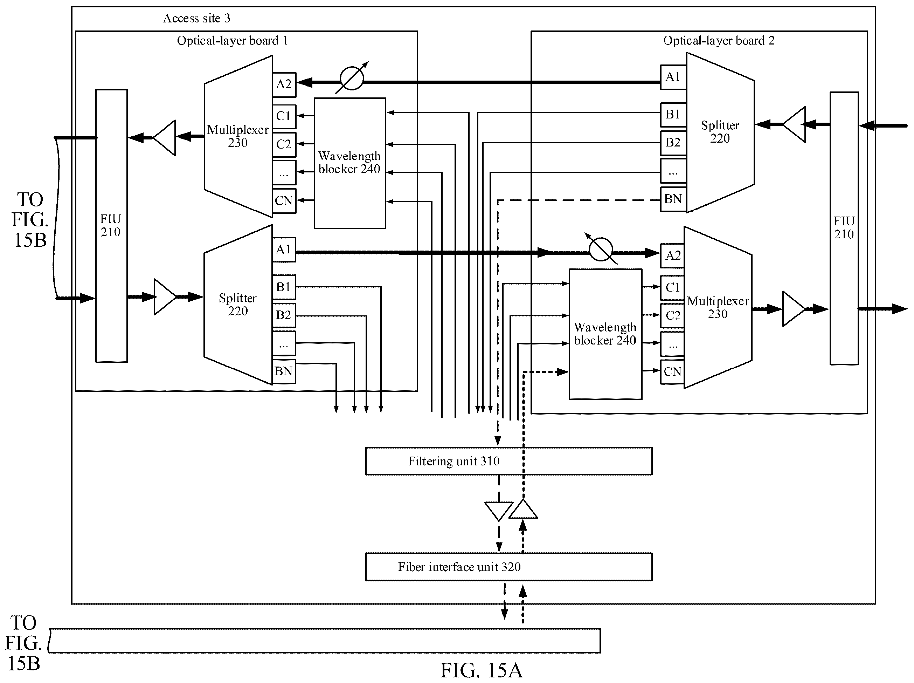

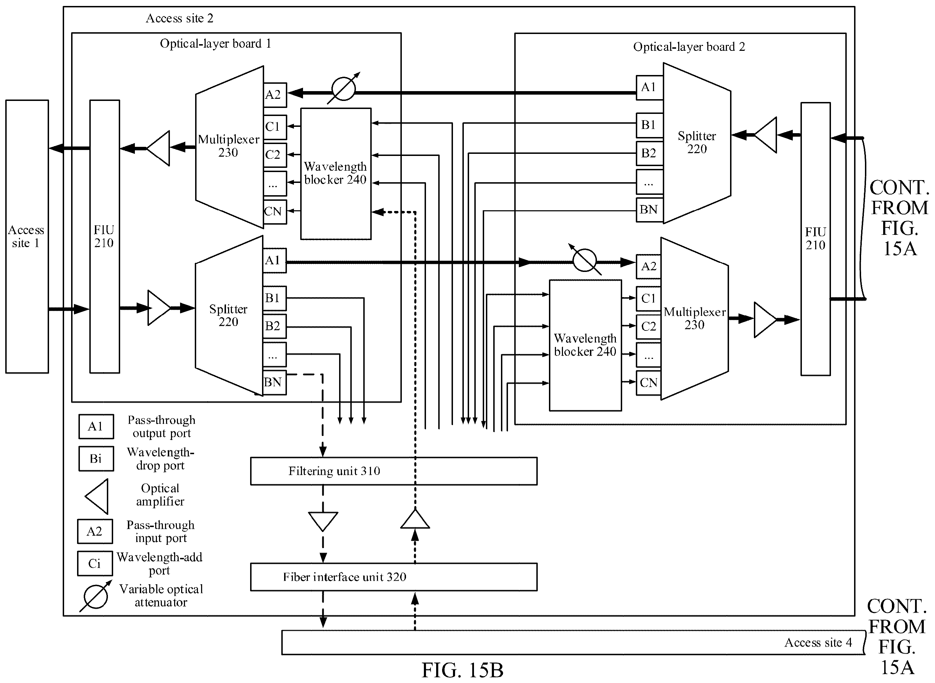

Refer to FIG. 15A and FIG. 15B. A wavelength-add port CN in an optical-layer board 1 at an access site 2 serves as a wavelength-add extended port, and is connected to an output interface of a fiber interface unit 320. A wavelength-add signal of an access site 4 enters the access site 2 through the fiber interface unit 320. After passing through an amplifier and a wavelength blocker 240 in the optical-layer board 1, the wavelength-add signal of the access site 4 is coupled with a wavelength-add optical signal of the access site 2 and an optical signal received through a pass-through input interface, and sending is performed by the fiber interface unit 320. In some embodiments, if an optical label detection unit 250 in the optical-layer board 1 detects that there is a conflict between an optical signal that is of an access ring 2 and that is to enter a wavelength-add port BN, and an optical signal of a main link, the wavelength blocker 240 blocks the wavelength-add optical signal of the access site 4 on an access ring, to avoid that the wavelength-add optical signal enters the wavelength-add port CN.

The wavelength-drop port BN in the optical-layer board 1 at the access site 2 serves as a wavelength-drop extended port, and is connected to a filtering unit 310. The access site 2 broadcasts an optical signal to the access site 4 on the access ring through the wavelength-drop port BN. After receiving the optical signal to be broadcast to the access site 4 on the access ring 2, the filtering unit 310 at the access site 2 filters out, from the optical signal to be broadcast to the access site 4 on the access ring, an optical signal of a wavelength configured for each site included on the access ring.

Refer to FIG. 15A and FIG. 15B. The wavelength-add port CN in an optical-layer board 2 at an access site 3 serves as a wavelength-add extended port, and is connected to the output interface of the fiber interface unit 320. The wavelength-add signal of the access site 4 enters the access site 2 through the fiber interface unit 320. After passing through an amplifier and a wavelength blocker 240 in the optical-layer board 2, the wavelength-add signal of the access site 4 is coupled with a wavelength-add optical signal of the access site 3 and the optical signal received through the pass-through input interface, and sending is performed by the fiber interface unit 320. In some embodiments, if an optical label detection unit 210 in the optical-layer board 2 detects that there is a conflict between an optical signal that is of an access ring 2 and that is to enter a wavelength-add port BN, and an optical signal of a main link, the wavelength blocker 240 blocks the wavelength-add optical signal of the access site 4 on an access ring, to avoid that the wavelength-add optical signal enters the wavelength-add port CN.

The wavelength-drop port BN in the optical-layer board 2 at the access site 3 serves as a wavelength-drop extended port, and is connected to a filtering unit 310. The access site 3 broadcasts an optical signal to the access site 4 on the access ring through the wavelength-drop port BN. After receiving the optical signal to be broadcast to the access site 4 on the access ring 2, the filtering unit 310 at the access site 3 filters out, from the optical signal to be broadcast to the access site 4 on the access ring, an optical signal of a wavelength configured for each site included on the access ring.

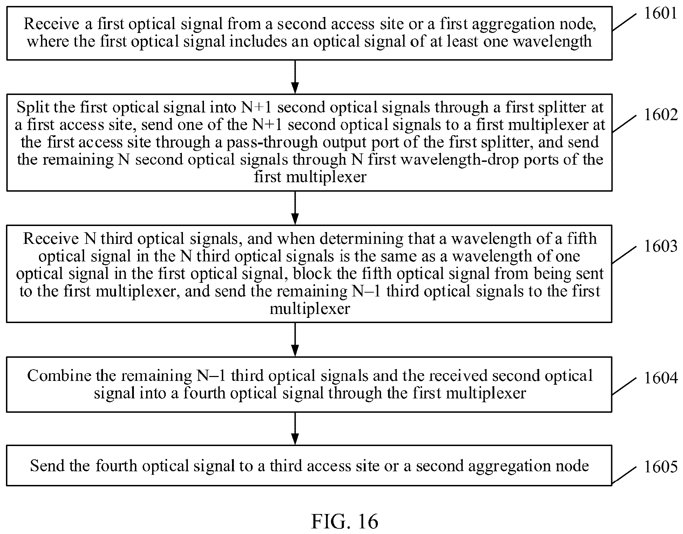

Based on the foregoing embodiments, embodiments of this application further provide an optical signal processing method. FIG. 16 is a flowchart of an optical signal processing method according to an embodiment of this application. The optical signal processing method may be performed by the foregoing access site.

1601: Receive a first optical signal from a second access site or a first aggregation node, where the first optical signal includes an optical signal of at least one wavelength.

1602: Split the first optical signal into N+1 second optical signals through a first splitter at a first access site, send one of the N+1 second optical signals to a first multiplexer at the first access site through a pass-through output port of the first splitter, and send the remaining N second optical signals through N first wavelength-drop ports of the first multiplexer.

1603: Receive N third optical signals, and when determining that a wavelength of a fifth optical signal in the N third optical signals is the same as a wavelength of one optical signal in the first optical signal, block the fifth optical signal from being sent to the first multiplexer, and send the remaining N-1 third optical signals to the first multiplexer.

1604: Combine the remaining N-1 third optical signals and the received second optical signal into a fourth optical signal through the first multiplexer.

1605: Send the fourth optical signal to a third access site or a second aggregation node.

In embodiments of this application, in optical-layer wavelength-drop processing, an access site performs splitting through a splitter in a broadcast manner. A wavelength-drop wavelength is not fixed, so that the access site has a colorless capability. In wavelength-add processing, to prevent a conflict between a wavelength-add wavelength and an optical signal (that is, a pass-through optical signal) in a main line, a wavelength-add blocker is used to cause optical signals of different wavelengths to pass, thereby avoiding crosstalk between the wavelength-add signal and an existing signal in the main line. In addition, a plurality of optical-layer modules are used for connection. One wavelength-drop port in one optical-layer module is multiplexed as a wavelength-drop extended port, and the wavelength-drop extended port is optically connected to a fiber interface unit of another optical-layer module. One wavelength-add port in one optical-layer module is multiplexed as a wavelength-add extended port, and the wavelength-add extended port is optically connected to a fiber interface unit of another optical-layer module. In other words, both each wavelength-drop port and each wavelength-add port support being multiplexed as extended ports, that is, both each wavelength-drop port and each wavelength-add port have port extension capabilities. Port extension improves flexibility of network deployment. In addition, a new board is developed to increase a quantity of ports, thereby reducing development resources and development costs.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to embodiments of this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor machine, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

It is clear that a person skilled in the art can make various modifications and variations to this application without departing from the scope of this application. In this way, provided that these modifications and variations of this application fall within the scope of the claims of this application and equivalent technologies thereof, this application is also intended to cover these modifications and variations.

## Claims

1. An access site, comprising a first fiber interface unit, a first splitter, a first wavelength blocker, a first multiplexer, and a second fiber interface unit, wherein
the first fiber interface unit is configured to receive a first optical signal, wherein the first optical signal comprises an optical signal of at least one wavelength;
the first splitter is configured to: split the first optical signal into N+1 second optical signals, send one of the N+1 second optical signals to the first multiplexer through a pass-through output port of the first splitter, and send remaining N second optical signals through N wavelength-drop ports;
the first wavelength blocker is configured to: receive N third optical signals, wherein wavelengths of the N third optical signals are different, and when determining that the wavelengths of the N third optical signals are all different from the wavelength of the optical signal in the first optical signal, send the N third optical signals to the first multiplexer through N wavelength-add ports of the first multiplexer;
the first multiplexer is configured to: receive the N third optical signals through the N wavelength-add ports, and combine, into a fourth optical signal, the one second optical signal that is sent through the pass-through output port of the first splitter and that is received through a pass-through input interface of the first multiplexer, and the N third optical signals; and
the second fiber interface unit is configured to send the fourth optical signal.

2. The access site according to claim 1, wherein the first wavelength blocker is further configured to: when a wavelength of a fifth optical signal in the N third optical signals is the same as a wavelength of one optical signal in the first optical signal, block the fifth optical signal from being transmitted to the first multiplexer.

3. The access site according to claim 2, wherein the access site further comprises:
an optical label detection unit, configured to: detect whether a wavelength of each optical signal in the N third optical signals is the same as the wavelength of the optical signal in the first optical signal, and when detecting that the wavelength of the fifth optical signal in the N third optical signals is the same as the wavelength of the optical signal in the first optical signal, control the first wavelength blocker to block the fifth optical signal from being transmitted to the first multiplexer.

4. The access site according to any one of claims 1 to 3, wherein the access site further comprises N optical transform units OTUs, wherein the N OTUs are optically coupled to the N wavelength-drop ports of the first splitter in one-to-one correspondence; and
a first OTU in the N OTUs receives a second optical signal sent through a first wavelength-drop port corresponding to the N wavelength-drop ports, and separates an optical signal of a wavelength corresponding to the first OTU from the received second optical signal in a coherent reception manner.

5. The access site according to any one of claims 1 to 3, wherein the second fiber interface unit is further configured to receive a sixth optical signal; and
the access site further comprises a second splitter, a second multiplexer, and a second wavelength blocker, wherein
the second splitter is configured to: split the sixth optical signal into N+1 seventh optical signals, send one of the N+1 seventh optical signals to the second multiplexer, and send remaining N seventh optical signals through N second wavelength-drop ports;
the second wavelength blocker is configured to: receive N eighth optical signals through N second wavelength-add ports, wherein wavelengths of the N eighth optical signals are different, and when determining that a wavelength of any one of the N eighth optical signals is different from wavelengths of all optical signals in the sixth optical signal, send the N eighth optical signals to the first multiplexer;
the second multiplexer is configured to: receive the N eighth optical signals, and combine the N eighth optical signals and the first optical signal into a ninth optical signal; and
the first fiber interface unit is configured to send the ninth optical signal.

6. An optical-layer module, used in a first access site, wherein the optical-layer module comprises: a fiber interface unit, a splitter, a wavelength blocker, and a multiplexer, wherein
the fiber interface unit is configured to receive a first optical signal from a second access site, wherein the first optical signal comprises an optical signal of at least one wavelength;
the splitter is configured to: split the first optical signal into N+1 second optical signals, and send the N+1 second optical signals through N+1 output ports of the splitter, wherein one of the N+1 output ports of the splitter serves as a pass-through output port, and remaining N output ports serve as wavelength-drop ports;
the multiplexer is configured to receive a third optical signal through a pass-through input port, wherein the third optical signal comprises an optical signal of at least one wavelength;
the wavelength blocker is configured to: receive N fourth optical signals from N optical transform units OTUs, wherein wavelengths of the N fourth optical signals are different, and when determining that the wavelengths of the N fourth optical signals are all different from the wavelength of the optical signal in the third optical signal, send the N fourth optical signals to the multiplexer through N wavelength-add ports of the multiplexer;
the multiplexer is further configured to combine, into a fifth optical signal, the N fourth optical signals received the N wavelength-add ports, and the third optical signal; and
the fiber interface unit is further configured to send the fifth optical signal to the second access site.

7. The optical-layer module according to claim 6, wherein the optical-layer module further comprises:
an optical label detection unit, configured to: detect whether a wavelength of each optical signal in the N fourth optical signals is the same as the wavelength of the optical signal in the third optical signal, and when detecting that a wavelength of a sixth optical signal in the N fourth optical signals is the same as a wavelength of one optical signal in the first optical signals, control the wavelength blocker to block the sixth optical signal from being transmitted to the multiplexer.

8. The optical-layer module according to claim 6 or 7, wherein the optical-layer module further comprises a variable optical attenuator, configured to adjust power of the third optical signal received through the pass-through input port.

9. An access site, comprising at least one optical-layer module according to any one of claims 6 to 8.

10. The access site according to claim 9, wherein the at least one optical-layer module comprises a first optical-layer module and a second optical-layer module, wherein
a first wavelength-drop port of N wavelength-drop ports in the first optical-layer module is optically connected to an input port of a fiber interface unit in the second optical-layer module; and the first wavelength-drop port is any one of the N wavelength-drop ports in the first optical-layer module; and
a first wavelength-add port of N wavelength-add ports in the first optical-layer module is optically connected to the fiber interface unit in the second optical-layer module; and the first wavelength-add port is any one of the N wavelength-add ports in the first optical-layer module.

11. The access site according to claim 10, wherein a pass-through output port in the second optical-layer module is multiplexed as a wavelength-drop port for use; and a pass-through input port in the second optical-layer module is multiplexed as a wavelength-add port for use.

12. The access site according to any one of claims 9 to 11, wherein the access site is a site at which a first access ring intersects an access chain connected to the first access ring; and
the access site further comprises a filtering unit, wherein the filtering unit is optically connected to a second wavelength-drop port of N wavelength-drop ports in any one of the at least one optical-layer module; the second wavelength-drop port is for the access site to be connected, in a wavelength-drop direction, to a next-hop access site that is of the access site and that is on the access chain, or is for the access site to be connected, in a wavelength-drop direction, to a next-hop access site that is of the access site and that is on the first access ring; and the filtering unit is configured to filter out an optical signal of a wavelength configured for an access site comprised on the first access ring.

13. The access site according to any one of claims 9 to 11, wherein the access site is a site at which a first access ring intersects a second access ring connected to the first access ring;
the access site further comprises a filtering unit, wherein the filtering unit is optically connected to a second wavelength-drop port of N wavelength-drop ports in any one of the at least one optical-layer module; and
the second wavelength-drop port is for the access site to be connected, in a wavelength-drop direction of the access site, to a next-hop access site that is of the access site and that is on the access chain, or is for the access site to be connected, in a wavelength-drop direction, to a next-hop access site that is of the access site and that is on the first access ring; and the filtering unit is configured to filter out an optical signal of a wavelength configured for an access site comprised on the first access ring.

14. An optical signal processing method, applied to a first access site, wherein the method comprises:
receiving a first optical signal from a second access site or a first aggregation node, wherein the first optical signal comprises an optical signal of at least one wavelength;
splitting the first optical signal into N+1 second optical signals through a first splitter at the first access site, sending one of the N+1 second optical signals to a first multiplexer at the first access site through a pass-through output port of the first splitter, and sending remaining N second optical signals through N first wavelength-drop ports of the first multiplexer;
receiving N third optical signals, and when determining that a wavelength of a fifth optical signal in the N third optical signals is the same as a wavelength of one optical signal in the first optical signal, blocking the fifth optical signal from being sent to the first multiplexer, and sending remaining N-1 third optical signals to the first multiplexer;
combining the remaining N-1 third optical signals and the received second optical signal into a fourth optical signal through the first multiplexer; and
sending the fourth optical signal to a third access site or a second aggregation node.
